# EUROPÄISCHE PATENTSCHRIFT

(11) **EP 0 459 330 B1**
(45) Veröffentlichungstag und Bekanntmachung des Hinweises auf die Patenterteilung: **29.03.1995**
(21) Anmeldenummer: 91108543.9
(22) Anmeldetag: 24.05.1991
(51) Int. Cl.: B23Q 1/25

(54) **Vorrichtung zur Handhabung von Werkstücken, Montageteilen oder dergleichen**
Manipulating device for workpieces, parts to be assembled or similar
Dispositif pour manipuler des pièces à usiner, à assembler ou des pièces similaires

(30) Priorität: 01.06.1990 DE 4016374
(43) Veröffentlichungstag der Anmeldung: 04.12.1991
(73) Patentinhaber: MICO-Gesellschaft für industrielle Automation mbH, D-73009 Göppingen (DE)
(72) Erfinder: Storz, Martin, Dipl.-Ing., 7340 Geislingen (DE)
(74) Vertreter: Lemke, Jörg-Michael, Dipl.-Ing.

(56) Entgegenhaltungen:
- DE-A- 3 500 724
- DE-B- 1 023 359
- FR-A- 2 499 728
- GB-A- 544 837
- GB-A- 2 154 920
- SU-A- 795 728
- US-A- 3 881 362

## Beschreibung

Die Erfindung betrifft eine Vorrichtung mit einem an einem Gestell angeordneten Getriebe, das über antriebs- und/oder steuerwellengetriebene Kurvenkörper zweidimensionale Bewegungen, vorzugsweise reziproke Bewegungen, steuert und zwei aneinander angelenkte Hebel aufweist, deren erster Hebel mit einem ersten Ende um eine am Gestell stationär angeordnete Achse schwenkbar gelagert ist und von der Kurve des ersten von zwei Kurvenkörpern gesteuert ist, wobei der erste Hebel an der Kurve des ersten Kurvenkörpers anliegt, und deren zweiter Hebel ein freies Ende aufweist und von der Kurve des zweiten der beiden Kurvenkörper gesteuert ist, wobei die Ausgestaltung der Kurven und die Ausgestaltung und die Anordnung der Hebel derart ist, daß das freie Ende des zweiten Hebels einer vorgegebenen Koppelbahn folgt.

Es sind kurvengesteuerte Handhabungsgeräte bekannt, deren Geradführungen gesonderte Elemente darstellen, die zusätzlich zur Kurvensteuerung vorgesehen werden müssen, und zwar sowohl für die waagerechte als auch für die senkrechte Bewegungsrichtung, was einen zusätzlichen Aufwand darstellt.

Um diesen Aufwand zu vermeiden, sind auch bereits Geräte entwickelt worden, die ausschließlich eine Kurvensteuerung aufweisen, wobei jedoch keine geraden Bewegungslinien möglich sind. Gerade Bewegungslinien sind jedoch für bestimmte Montageaufgaben erforderlich, um allzugroße Fertigungstoleranzen zu vermeiden.

Es ist nun eine Vorrichtung der eingangs erwähnten Art bekannt (GB-A-544837), bei der die beiden Kurvenkörper auf zwei unterschiedlichen, in erheblichem Abstand voneinander angeordneten Wellen befestigt sind. Es ist nicht erkennbar, wie die erforderliche, gemeinsame Steuerung dieser Wellen erfolgt, obgleich in irgendeiner Form Synchronizität geschaffen werden muß. Ferner sind diese beiden Wellen und damit auch die Kurvenkörper senkrecht zur Ebene der erzeugten Koppelbahn angeordnet, was eine direkte Steuerung der beiden Hebel durch Anlage der Hebel selber an den Kurven ausschließt. Es ist vielmehr, beispielsweise beim zweiten Hebel, ein kompliziertes Lenkergetriebe mit Stoßstange und Winkelhebel erforderlich. Abgesehen davon müssen nicht nur eine, sondern zwei gestellfeste Achsen vorhanden sein, um die bekannte Steuerung zu ermöglichen.

Ferner ist eine Vorrichtung bekannt (SU-A-795728), bei welcher ein erster Schwenkhebel kurvengesteuert einen zweiten Schwenkhebel bewegt, der mittig am freien Ende des ersten Schwenkhebels angelenkt ist und an seinem einen Ende ein Werkzeug und an seinem anderen Ende eine Rolle trägt, die von einem Nocken beaufschlagbar ist.

Die der Erfindung zugrundeliegende Aufgabe wird darin gesehen, eine Vorrichtung der eingangs genannten Art zur schaffen, die nicht nur ohne gesonderte Geradführungselemente und auch gerade Bewegungslinien aufweisen kann, sondern darüber hinaus erheblich einfacher ausgebildet ist und dabei nicht nur weniger Teile verwendet, sondern auch direkter arbeitet und demnach genauer ist. Weniger bewegliche Teile bedeuten nun einmal weniger Spiel bzw. kleinere Fertigungstoleranzen. Ferner soll die Vorrichtung zur Handhabung von Werkstücken, Montageteilen oder dergleichen geeignet sein.

Diese Aufgabe wird bei einer solchen Vorrichtung erfindungsgemäß dadurch gelöst, daß das freie Ende des zweiten Hebels zur Handhabung von Werkstücken, Montageteilen oder dergleichen ausgebildet ist und daß die Kurvenkörper zwei Kurvenscheiben sind, die auf einer gemeinsamen Antriebs- und/oder Steuerwelle sitzen, daß der zweite Hebel mit seinem anderen Ende unmittelbar am zweiten Ende des ersten Hebels angelenkt ist, und daß der zweite Hebel direkt an der Kurve der zweiten Kurvenscheibe anliegt.

Diese Koppelbahn muß nicht unbedingt aus einer senkrechten Bewegungslinie und einer waagerechten Linie zusammengesetzt sein, jedoch ist eine solche aus waagerechten und senkrechten Bewegungslinien zusammengesetzte Koppelbahn ohne gesondert angeordnete Geradführungen nach der Erfindung möglich.

Um die Reibung zwischen den Hebeln und den Kurvenscheiben zu verringern, liegen die beiden Hebel zweckmäßig jeweils über an ihnen drehbar gelagerte Rollen an den Kurven der Kurvenscheiben an. Der erforderliche Andruck der Hebel bzw. ihrer Rollen zur Anlage an den Kurven der Kurvenscheiben kann dabei durch Federn erfolgen.

Am freien Ende des zweiten Hebels kann vorteilhaft ein Anbaukopf für den Anbau eines nicht gezeigten Greifers zum Erfassen, Transportieren und Absetzen eines Werkstücks, Montageteils oder dergleichen angeordnet werden. Um diesen Anbaukopf lagestabil im Raum zu halten, kann darüber hinaus ein Führungsgestänge vorgesehen sein, das zur Parallelführung des Anbaukopfs auf der Koppelbahn dient.

Die Erfindung ist im folgenden anhand eines in einer Zeichnung dargestellten Ausführungsbeispiels näher erläutert.

Es zeigt:
- Fig. 1: eine isometrische Darstellung dieser Ausführungsform;
- Fig. 2: eine bevorzugte, mit der gezeigten Ausführungsform ausführbare Koppelbahn, die aus senkrechten und waagerechten Bewegungslinien zusammengesetzt ist, mit Darstellung der jeweiligen Rast an den Endpunkten;
- Fig. 3: eine Seitenansicht der Ausführungsform nach Fig. 1;

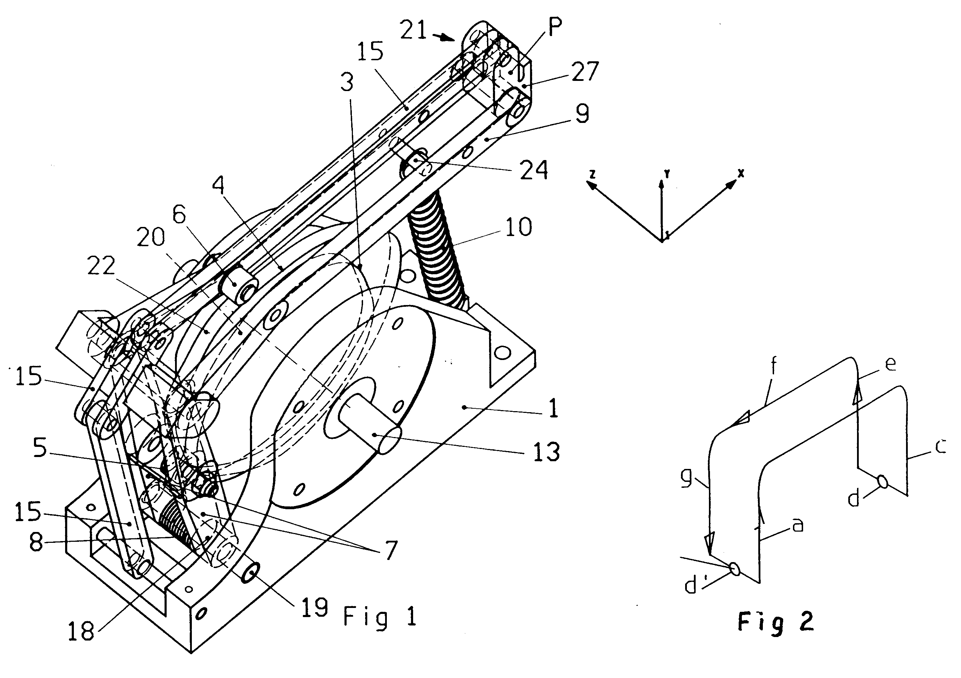

Die dargestellte, bevorzugte Vorrichtung zur Handhabung von Werkstücken, Montageteilen oder dergleichen, die nicht gezeigt sind, besitzt ein Gestell 1 mit einem Getriebe, das über auf einer Antriebs- und/oder Steuerwelle 13 befestigte Kurvenscheiben 3 und 4 zweidimensionale Bewegungen steuert, beispielsweise die in Figur 2 dargestellte Koppelbahn aus einer vertikal anhebenden Bewegungslinie a, einer horizontalen Bewegungslinie b zur Translation und einer wiederum vertikalen, abwärtsführenden Bewegungslinie c in eine Rast d. Daran kann sich dann die Rückführung über Bewegungslinien e, f und g anschließen, woraufhin wiederum eine Rast d' durchlaufen wird. Diese Bewegungen erfolgen in der durch die Koordinaten x für jeweils eine waagerechte Bewegungslinie und y für jeweils eine vertikale Bewegungslinie in einer Ebene gemäß dem in Figur 1 rechts oben gezeigten Koordinatensystem. Die dazu senkrechte, räumliche Koordinate ist lediglich der Vollständigkeit halber gezeigt und hier irrelevant.

Wie ersichtlich, ergeben die Koppelbahnen gemäß Fig. 2 reziproke Bewegungen.

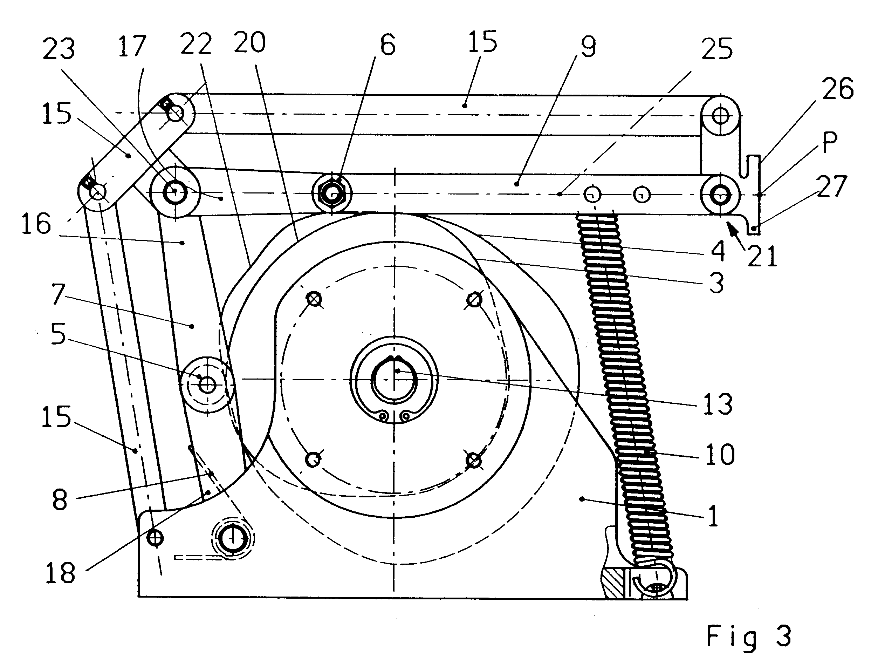

Die Figuren 1 und 3 zeigen ferner zwei an ihren einander zugekehrten Enden 16 und 17 aneinander angelenkte Hebel 7 und 9, deren erster Hebel 7 mit seinem anderen Ende 18 um eine am Gestell 1 stationär angeordnete Achse 19 schwenkbar gelagert ist. Dieser Hebel 7 liegt, und zwar bei der gezeigten Ausführungsform mittels einer Rolle 5, an der Kurve 20 der ersten von zwei Kurvenscheiben 3 und 4 an. Der zweite Hebel 9 der beiden Hebel weist ein freies Ende 21 zur Halterung eines nicht gezeigten Werkstücks, Montageteils oder dergleichen auf und liegt an der Kurve 22 der zweiten der beiden Kurvenscheiben 3 und 4 an, nämlich an der Kurvenscheibe 4.

Die Ausgestaltung der Kurven 20 und 22 und die Anordnung der Hebel 7 und 9 ist dabei derart, daß das freie Ende 21 des zweiten Hebels 9 einer vorgegebenen Koppelbahn folgt, im dargestellten Falle in der erläuterten Weise der Koppelbahn gemäß Figur 2.

Bei der gezeigten, bevorzugten Ausführungsform sind die beiden Hebel 7 und 9 aus Stabilitätsgründen jeweils als Doppelhebel (Fig.1) ausgeführt, von denen jeweils einer über eine an ihm drehbar gelagerte Rolle 5 bzw. 6 an der jeweils zugehörigen der Kurven 20, 22 der Kurvenscheiben 3, 4 anliegt. Die Hebel 7, 9 bzw. ihre Rollen 5, 6 sind dabei jeweils durch die Kraft von Federn in Anlage an den Kurven 20, 22 der Kurvenscheiben 3, 4 gehalten und drehen sich relativ zueinander jeweils um die gemeinsame Schwenkachse. Bei der gezeigten Ausführungsform ist die den Hebel 7 beaufschlagende Feder eine sich einerseits an dem Hebel 7 und andererseits am Gestell 1 abstützende Bügelfeder 8, während es sich im Falle des Hebels 9 um eine Schraubenzugfeder handelt, die einerseits am Hebel 9, bzw. an einem Querbolzen 24 des Doppelhebels 9, und andererseits am Gestell 1 eingehängt bzw. befestigt ist (Fig. 1 und 3). Am freien Ende 21 des zweiten Hebels 9 ist bei der gezeigten Ausführungsform ein Anbaukopf 27 für den Anbau eines nicht gezeigten Greifers zur Handhabung eines Werkstücks, Montageteils oder dergleichen angeordnet. Zur Parallelführung dieses Anbaukopfes 27 auf der Koppelbahn (Fig. 2) ist ein Führungsgestänge 15 vorgesehen, wie es für die Parallelführung von Zeichengeräten an Zeichenmaschinen oder dergleichen an sich bekannt ist. Der nicht gezeigte Greifer ist für das Aufnehmen, Transportieren und Absetzen der Werkstücke, Montageteile oder derglichen geeignet und kann vorteilhaft dem Greifer entsprechen, der in der DE-PS 35 34 305, beschrieben ist.

Die Koppelbahnen gemäß Fig. 2 durchfährt natürlich jeder beliebige Punkt des Anbaukopfes 27, der Symmetrie halber ist hierfür jedoch in den Figuren 1 und 3 der auf der Längsachse 25 des Hebels 9 angeordnete Punkt P an der Außenfläche 26 des Anbaukopfes 27 vorgesehen.

Es wird erneut betont, daß die Koppelbahn gemäß Fig. 2 nicht zwingend ist. In Abhängigkeit von der Ausgestaltung der gewünschten Kurvenbahnen und des Lenkergetriebes lassen sich auch anderweitige, aus einzelnen, geradlinigen oder auch gekrümmten Teilstücken bzw. Bewegungslinien zusammengesetzte Koppelbahnen darstellen, wie der Fachmann anhand der erteilten Lehre ohne Schwierigkeiten nachvollziehen kann.

## Patentansprüche

1. Vorrichtung mit einem an einem Gestell (1) angeordneten Getriebe, das über antriebs- und/oder steuerwellengetriebene Kurvenkörper zweidimensionale Bewegungen, vorzugsweise reziproke Bewegungen, steuert und zwei aneinander angelenkte Hebel (7,9) aufweist, deren erster Hebel (7) mit einem ersten Ende (18) um eine am Gestell (1) stationär angeordnete Achse (19) schwenkbar gelagert ist und von der Kurve (20) des ersten von zwei Kurvenkörper gesteuert ist, wobei der erste Hebel (7) an der Kurve (20) des ersten Kurvenkörpers anliegt, und deren zweiter Hebel (9) ein freies Ende (21) aufweist und von der Kurve (22) des zweiten der beiden Kurvenkörper gesteuert ist, wobei die Ausgestaltung der Kurven (20,22) und die Ausgestaltung und die Anordnung der Hebel (7,9) derart ist, daß das freie Ende (21) des zweiten Hebels (9) einer vorgegebenen Koppelbahn folgt, **dadurch gekennzeichnet**, daß das freie Ende (21) des zweiten Hebels (9) zur Handhabung von Werkstücken, Montageteilen oder dergleichen ausgebildet ist und daß die Kurvenkörper zwei Kurvenscheiben (3,4) sind, die auf einer gemeinsamen Antriebs- und/oder Steuerwelle (13) sitzen, daß der zweite Hebel (9) mit seinem anderen Ende (17) unmittelbar am zweiten Ende (16) des ersten Hebels (7) angelenkt ist, und daß der zweite Hebel (9) direkt an der Kurve (22) der zweiten Kurvenscheibe (3 oder 4) anliegt.

2. Vorrichtung nach Anspruch 1, **dadurch gekennzeichnet**, daß die beiden Hebel (7,9) jeweils über an ihnen drehbar gelagerte Rollen (5,6) an den Kurven (20,22) der Kurvenscheiben (3,4) anliegen.

3. Vorrichtung nach Anspruch 1 oder 2, **dadurch gekennzeichnet**, daß die Hebel (7,9) bzw. ihre Rollen (5,6) jeweils durch die Kraft von Federn (8) in Anlage an den Kurven (22,22) der Kurvenscheiben (3,4) gehalten sind.

4. Vorrichtung nach Anspruch 1,2 oder 3, **dadurch gekennzeichnet**, daß am freien Ende (21) des zweiten Hebels (9) ein Anbaukopf (27) angeordnet, und daß ein Führungsgestänge (15) zur Parallelführung dieses Anbaukopfs auf der Koppelbahn (Fig. 2) vorgesehen ist.

5. Vorrichtung nach einem der vorhergehenden Ansprüche, **dadurch gekennzeichnet**, daß der Anbaukopf (27) zur Befestigung eines Greifers zum Erfassen, Transportieren und Absetzen eines Werkstücks, Montageteils oder dergleichen ausgebildet ist.

6. Vorrichtung nach einem der vorhergehenden Ansprüche, **dadurch gekennzeichnet**, daß die Hebel (7,9) doppelt ausgebildet sind.

## Claims

1. An apparatus having a gear mechanism which is arranged on a frame (1) and controls two-dimensional movements, preferably reciprocating movements, by way of drive- and/or control-shaft driven cam bodies, and has two mutually articulated levers (7, 9) whereof the first lever (7) is mounted to be pivotal by means of a first end (18) about a pin (19) arranged to be stationary on the frame (1) and is controlled by the cam (20) of the first of two cam bodies, the first lever (7) bearing against the cam (20) of the first cam body, and whereof the second lever (9) has a free end (21) and is controlled by the cam (22) of the second of the two cam bodies, the construction of the cams (20, 22) and the construction and the arrangement of the levers (7, 9) being such that the free end (21) of the second lever (9) follows a predetermined coupling path, characterized in that the free end (21) of the second lever (9) is constructed to manipulate workpieces, assembly parts or the like, and in that the cam bodies are two cam discs (3, 4) which are seated on a common drive and/or control shaft (13), in that the second lever (9) is directly articulated by means of its other end (17) to the second end (16) of the first lever (7), and in that the second lever (9) bears directly against the cam (22) of the second cam disc (3 or 4).

2. An apparatus according to Claim 1, characterized in that the two levers (7, 9) each bear against the cams (20, 22) of the cam discs (3, 4) by way or rollers (5, 6) mounted rotatably thereon.

3. An apparatus according to Claim 1 or 2, characterized in that the levers (7, 9) or their rollers (5, 6) are each held bearing against the cams (22, 22) of the cam discs (3, 4) by the force of springs (8).

4. An apparatus according to Claim 1, 2 or 3, characterized in that a lengthening head (27) is arranged at the free end (21) of the second lever (9), and in that a guide linkage (15) is provided for the parallel guidance of this lengthening head on the coupling path (Fig. 2).

5. An apparatus according to one of the preceding claims, characterized in that the lengthening head (27) is constructed for securing a gripper for grasping, transporting and setting down a workpiece, assembly part or the like.

6. An apparatus according to one of the preceding claims, characterized in that the levers (7, 9) are of double construction.

## Revendications

1. Dispositif comportant un engrenage disposé sur un support (1), qui commande, par l'intermédiaire de corps incurvés entraînés par un arbre d'entraînement et/ou de commande, des mouvements bi-dimensionnels, de préférence, des mouvements réciproques, et qui présente deux leviers articulés l'un contre l'autre (7, 9) dont le premier levier (7) est logé de manière articulée avec une première extremité (18) autour d'un axe (19) disposé de manière stationnaire sur le support (1) et est commandé par la courbe (20) du premier de deux corps incurvés, le premier levier (7) se trouvant au contact de la courbe (20) du premier corps incurvé, et dont le deuxième levier (9) présente une extrémité libre (21) et est commande par la courbe (22) du deuxième des deux corps incurvés, la configuration des courbes (20, 22) et la configuration et la disposition des leviers (7, 9) étant telles que l'extrémité libre (21) du deuxième levier (9) suit une trajectoire couplée prédéterminée, caractérisé en ce que l'extrémité libre (21) du deuxième levier (9) est conçue pour la manipulation de pièces, d'éléments de montage ou autres éléments du même genre, et en ce que les corps incurvés sont deux cames (3, 4) qui reposent sur un arbre d'entraînement et/ou de commande commun (13), que le deuxième levier (9) est articulé avec son autre extrémité (17) directement sur la deuxième extrémité (16) du premier levier (7) et que le deuxième levier (9) se trouve directement au contact de la courbe (22) de la deuxième came (3 ou 4).

2. Dispositif selon la revendication 1, caractérisé en ce que les deux leviers (7, 9) se trouvent, chacun par l'intermédiaire de rouleaux (5, 6) logés de manière à pouvoir tourner sur ces derniers, au contact des courbes (20, 22) des cames (3, 4).

3. Dispositif selon la revendication 1 ou 2, caractérisé en ce que les leviers (7, 9) ou leurs rouleaux (5, 6) sont maintenus à chaque fois par la force de ressorts (8) au contact des courbes (22, 22) des cames (3, 4).

4. Dispositif selon la revendication 1, 2 ou 3, caractérisé en ce que se trouve disposée à l'extremité libre du deuxième levier (9) une tête de montage (27) et qu'une timonerie de guidage (15) est prévue pour le guidage parallèle de cette tête de montage sur la trajectoire couplée (figure 2).

5. Dispositif selon l'une quelconque des revendications précédentes, caractérisé en ce que la tête de montage (27) est conçue pour la fixation d'une griffe destinée à saisir, transporter et poser une pièce, un élément de montage ou un autre élément du même genre.

6. Dispositif selon l'une quelconque des revendications précédentes, caractérisé en ce que les leviers (7, 9) sont conçus en double.
